# EUROPÄISCHE PATENTANMELDUNG

(11) **EP 1 075 934 A2**
(43) Veröffentlichungstag der Anmeldung: **14.02.2001**
(21) Anmeldenummer: 00116463.1
(22) Anmeldetag: 29.07.2000
(51) Int. Cl.: B32B 5/28, B32B 9/02

(54) **Mehrlagiger Verbundkörper und Verfahren zu dessen Herstellung**

(30) Priorität: 09.08.1999 DE 19937574
(71) Anmelder: Möller Plast GmbH, 33649 Bielefeld (DE)
(72) Erfinder: Beckmann, Friedhelm, Dipl.-Ing., 32120 Hiddenhausen (DE)
(74) Vertreter: Schirmer, Siegfried, Dipl.-Ing.

(57) **Zusammenfassung**

Mehrlagiger Verbundkörper, der durch mindestens eine mit thermoplastischem Kunststoff gebundene Naturfaserschicht und ggf. eine oder mehrere Thermoplastschichten und/oder Verstärkungseinlagen aus offenporigem Gewebe, das von den schmelzenden Kunststoffen benachbarter Naturfaser- oder Thermoplastschichten durchdrungen und an diesen als Bewehrung verankert ist, gebildet ist, zur Herstellung von Bauteilen oder Formteilen, insbesondere für Kraftfahrzeuge, mit mindestens einer Verstärkungseinlage aus einem aus Fasern gebildeten offenporigen Gewebe, das dadurch gekennzeichnet, daß die mit thermoplastischem Kunststoff gebundene Naturfaserschicht unter Bildung einer Verstärkungsschicht von außen her mit einem mit dem thermoplastischen Kunststoff verträglichen Verstärkungsmaterial durchdrungen und mit diesem beschichtet ist, wobei in und/oder auf der Verstärkungsschicht Verbindungs- und/oder Funktions- und/oder Verstärkungselemente aus dem gleichen Material wie das Verstärkungsmaterial oder einem damit verträglichen Material einstückig mit der Verstärkungsschicht angebracht bzw. ausgebildet sind, sowie Verfahren zu dessen Herstellung.

## Beschreibung

Die Erfindung betrifft einen mehrlagigen Verbundkörper, der durch mindestens eine mit thermoplastischem Kunststoff gebundene Naturfaserschicht und ggf. eine oder mehrere Thermoplastschichten und/oder Verstärkungseinlagen aus offenporigem Gewebe, das von den schmelzenden Kunststoffen benachbarter Naturfaser- oder Thermoplastschichten durchdrungen und an diesen als Bewehrung verankert ist, gebildet ist, zur Herstellung von Bauteilen oder Formteilen, insbesondere für Kraftfahrzeuge.

Derartige Verbundkörper, wie sie aus der DE 197 06 839 A1 bekannt sind, haben sich in der Praxis an sich bestens bewährt.

Der Erfindung liegt die Aufgabe zugrunde, den bekannten mehrlagigen Verbundkörper dahingehend weiterzuentwickeln, daß Konstruktionselemente wie Verbindungs-, Funktions- oder Verstärkungselemente in festigkeitsmäßig und herstellungstechnisch optimaler Weise an dem Verbundkörper angebracht werden können.

Diese Aufgabe wird erfindungsgemäß durch einen gattungsgemäßen mehrlagigen Verbundkörper gelöst, der sich dadurch auszeichnet, daß die mit thermoplastischem Kunststoff gebundene Naturfaserschicht unter Bildung einer Verstärkungsschicht ganz oder teilweise mit einem mit dem thermoplastischen Kunststoff verträglichen Verstärkungsmaterial durchdrungen und mit diesem beschichtet ist, wobei in und/oder auf der Verstärkungsschicht Verbindungs- und/oder Funktions- und/oder Verstärkungselemente aus dem gleichen Material wie das Verstärkungsmaterial oder einem damit verträglichen Material einstückig mit der Verstärkungsschicht angebracht bzw. ausgebildet sind.

Durch diese Maßnahme wird die Herstellung von mit Funktionselementen usw. versehenen Verbundkörpern wesentlich vereinfacht, und diese werden noch besser eingebunden, da sich gezeigt hat, daß die Durchtränkung der der aufgebrachten Verstärkungsschicht benachbarten Naturfaser- oder Gewebeschicht stark verbessert wird. Aufgrund der innigen Durchtränkung bzw. Eindringung des Verstärkungsmaterials in die zugrundeliegende Schicht tritt eine besonders widerstandsfähige Verbindung in Form einer regelrechten mechanischen Verkrallung des aufgebrachten Verstärkungsmaterials ein, so daß die genannten Konstruktionselemente mit dem Verbundkörper eine einstückige, unlösbare Verbindung bzw. Einheit bilden.

Ein Verfahren zum Herstellen eines mehrlagigen Verbundkörpers nach der Erfindung zeichnet sich dadurch aus, daß auf eine Außenseite einer mit thermoplastischem Kunststoff gebundenen Naturfaserschicht ein mit dem thermoplastischen Material verträgliches Verstärkungsmaterial in flüssiger, pastöser, Pulver- oder Granulatform als dünne Schicht aufgetragen und durch Energiezufuhr mit der Naturfaserschicht innig verbunden wird, wobei Verbindungs- und/oder Funktions- und/oder Verstärkungselemente aus dem gleichen Material wie das Verstärkungsmaterial oder einem damit verträglichen Material einstückig mit der Verstärkungsschicht ausgebildet werden.

In besonders vorteilhafter Weise ist es erfindungsgemäß möglich, Verbindungs- und/oder Funktions- und/oder Verstärkungselemente aus dem gleichen Material wie das Verstärkungsmaterial oder einem damit verträglichen Material einstückig mit dem Verbundkörper auszubilden.

Weitere Merkmale und vorteilhafte Weiterbildungen der Erfindung, insbesondere in Bezug auf die Zuordnung einzelner Schichten bzw. Verstärkungseinlagen, ergeben sich aus den nachfolgend beschriebenen Ausführungsbeispielen, wobei auf eine Zeichnung Bezug genommen ist, in der
Fig. 1 eine schematische, perspektivische Darstellung eines Randabschnitts eines erfindungsgemäßen Verbundkörpers in Form einer mehrlagigen Matte mit beidseitig außenliegenden Verstärkungseinlagen zeigt; und
Fig. 2 eine entsprechende Darstellung eines Verbundkörpers mit einer größeren Anzahl von Lagen zeigt.

Die Verbundkörper bzw. Fasermatten in den hier wiedergegebenen Ausführungsbeispielen sind mit jeweils gegenüber der darüberliegenden Schicht weggeschnittenen Randstreifen der einzelnen Schichten dargestellt, um in der perspektivischen Ansicht alle Schichten sichtbar machen zu können. Die schematische Darstellung der Fasermatte, die das Ausgangsmaterial für den zu formenden Verbundkörper bzw. das geformte Bauteil bildet, ist mit der eines Verbundkörpers identisch.

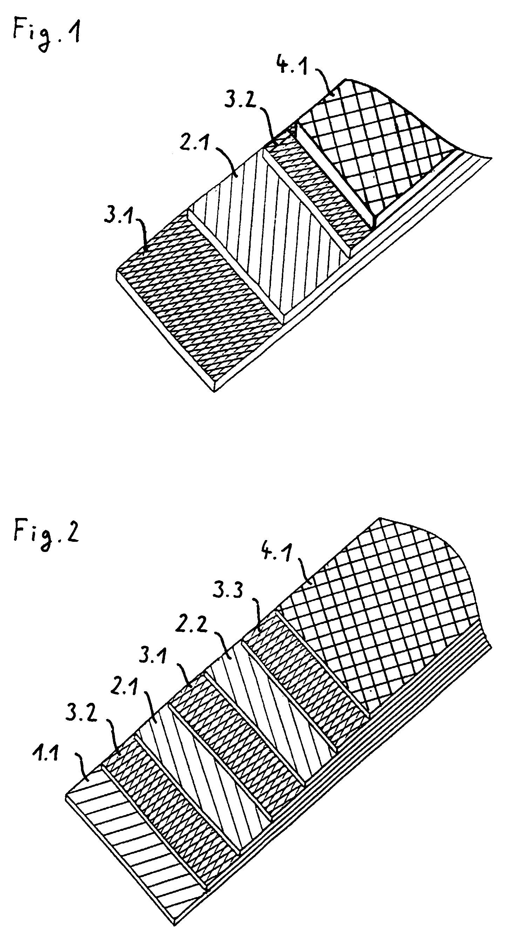

In einer Ausführung nach Fig. 1 wird eine Naturfaserschicht 2.1 auf beiden Seiten von je einem (zusätzlichen) Verstärkungsgewebe 3.1 und 3.2 abgedeckt. Die Naturfaserschicht besteht aus Naturfasern wie Hanf, Flachs, Jute, Sisal und dergleichen oder auch aus Naturfasergemischen, die mit einem Bindemittel aus thermoplastischem Kunststoff getränkt oder mit entsprechenden Fasern vermischt sind und nach der Formgebung mit dem Bindemittel einen Verbund bilden.

Die beiden Verstärkungseinlagen 3.1 und 3.2, die die beiden thermoplastgebundenen Naturfaserschichten sandwichartig umschließen, bestehen aus einem Gewebe mit offenen Strukturen, das aus einem Fasermaterial besteht, dessen Schmelztemperatur (soweit vorhanden) höher ist als die des für die Naturfaserschicht 2.1 verwendeten thermoplastischen Bindemittels. Im Ausführungsbeispiel besteht das großporige Gewebe der Verstärkungseinlagen aus Polyesterfasern. Alternativ können auch Fasern aus Polybutylentherephtalat oder Kohlefasern oder Glasfasern bzw. eine Kombination aus diesen oder anderen hochschmelzenden Fasern eingesetzt werden.

Erfindungsgemäß ist der Verbundkörper auf seiner Außenseite, hierbei auf einer der außenliegenden Verstärkungseinlagen 3.1, 3.2 - in diesem Ausführungsbeispiel der Verstärkungseinlage 3.2- mit einem Verstärkungsmaterial 4.1 versehen, welches mit dem als Bindemittel der Naturfaserschicht 2.1 dienenden thermoplastischen Kunststoff identisch oder zumindest damit verträglich ist. Das Verstärkungsmaterial 4.1 wird in flüssiger, pastöser, Pulver- oder Granulatform als zusätzliche Schicht aufgetragen und im Zuge der Herstellung des Verbundkörpers durch Energiezufuhr mit der Verstärkungseinlage 3.1 und, soweit möglich und sinnvoll, zusätzlich mit der darunterliegenden Naturfaserschicht 2.1 innig verbunden.

Bei einem Verbundkörper ohne Verstärkungseinlage(n) 3.1, 3.2 verbindet sich das Verstärkungsmaterial unmittelbar mit der Naturfaserschicht 2.1.

Die Herstellung des Verbundkörpers insgesamt erfolgt vorzugsweise so, daß die Fasermatte beispielsweise zu einem für die Kraftfahrzeugherstellung benötigten Verbundkörper-Bauteil geformt wird, indem die Fasermatte zum einen auf eine im Schmelztemperaturbereich der verwendeten Thermoplasten liegende Temperatur von etwa 200°C erwärmt und dabei in die gewünschte Form verpreßt wird, wobei gleichzeitig oder anschließend das genannte Verstärkungsmaterial 4.1 aufgebracht und durch Energiezufuhr eingebunden wird.

In einer besonders bevorzugten Ausführungsvariante ist es möglich, während oder anschließend an den Preßvorgang auf der Verstärkungseinlage 3.2 (bzw. auf der Naturfaserschicht 2.1) Verbindungs-, Funktions- oder Verstärkungselemente wie Befestigungslaschen, Rippen o.ä. oder auch bestimmte optisch wirksame Oberflächenstrukturen auszubilden, die aus dem gleichen Material wie das Verstärkungsmaterial 4.1 oder aber aus einem damit verträglichen Material bestehen. Gleichermaßen kann aus ästhetischen Gründen eine besondere Farbgebung der Verstärkungsmaterialschicht 4.1 vorgesehen sein.

Beim Verpressen der erwärmten Fasermatte dringen die niedrig schmelzenden, aufgeschmolzenen Thermoplaste der Naturfaserschicht 2.1 in die weitmaschige Gewebestruktur der Verstärkungseinlagen 3.1, 3.2 ein und ummanteln diese. Es entsteht somit ein enger Verbund sämtlicher beteiligter Materialschichten, wobei das Verstärkungsgewebe 3.1, 3.2 als mechanische Bewehrung dient. Dadurch werden die mechanischen Eigenschaften des so hergestellten Bauteils, insbesondere hinsichtlich Biegespannung und Schlagfestigkeit, und die Verbundfestigkeit mit ggf. darauf anzubringenden Konstruktions- bzw. Funktionselementen erheblich verbessert.

Fig. 2 zeigt in einer Ausführungsvariante eine Fasermatte zur Herstellung von Bauteilen mit gegenüber dem ersten Ausführungsbeispiel weiter verbesserten Festigkeitseigenschaften durch Verwendung von drei Verstärkungseinlagen 3.1, 3.2 und 3.3. Die aus mehreren Schichten gebildete Fasermatte besteht aus einer Thermoplastschicht 1.1, einer zweiten Verstärkungseinlage 3.2, einer ersten Naturfaserschicht 2.1, einer ersten Verstärkungseinlage 3.1, einer zweiten Naturfaserschicht 2.2, einer dritten Verstärkungseinlage 3.3 und einer zusätzlich aufgebrachten Verstärkungsmaterialschicht 4.1.

Beim Erwärmen und Verpressen einer so aus Einzelschichten gebildeten Fasermatte durchdringt das aufgeschmolzene thermoplastische Material der Thermoplastschicht und der ersten und zweiten Naturfaserschichten jeweils beidseitig die offenporige, aus höher schmelzenden Fasern bestehende Gewebestruktur der Verstärkungseinlagen 3.1, 3.2 und 3.3, die in dem so gebildeten Bauteil aus einem sandwichartigen, einstückigen Verbundkörper somit eine mehrschichtige Bewehrung bilden und zu einer deutlichen Steigerung der Festigkeitseigenschafen beitragen. Entsprechend der Stärke der aus der Thermoplastschicht 1.1 und der Verstärkungsmaterialschicht 4.1 gebildeten Außenschichten des Verbundkörpers können an diesem beim Verpressen wiederum bestimmte Funktionselemente und/oder Oberflächenstrukturen ausgeformt, bzw. wenn es sich um vorab hergestellte Elemente handelt, einstückig eingebunden werden.

Alternativ können auch hier die Verstärkungseinlagen bzw. -gewebe 3.1, 3.2, 3.3 fehlen, wobei sich das aufzubringende Verstärkungsmaterial 4.1 dann unmittelbar mit einer Naturfaserschicht 2.1 oder 2.2 verbindet. Auch in dieser Variante wird durch die innige Verbindung und Verkrallung des Verstärkungsmaterials eine sehr feste Verbindung der Funktionselemente mit dem übrigen Verbundkörper erreicht.

## Patentansprüche

1. Mehrlagiger Verbundkörper, der durch mindestens eine mit thermoplastischem Kunststoff gebundene Naturfaserschicht und ggf. eine oder mehrere Thermoplastschichten und/oder Verstärkungseinlagen aus offenporigem Gewebe, das von den schmelzenden Kunststoffen benachbarter Naturfaser- oder Thermoplastschichten durchdrungen und an diesen als Bewehrung verankert ist, gebildet ist, zur Herstellung von Bauteilen oder Formteilen, insbesondere für Kraftfahrzeuge, dadurch gekennzeichnet, daß die mit thermoplastischem Kunststoff gebundene Naturfaserschicht unter Bildung einer Verstärkungsschicht ganz oder teilweise mit einem mit dem thermoplastischen Kunststoff verträglichen Verstärkungsmaterial durchdrungen und mit diesem beschichtet ist, wobei in und/oder auf der Verstärkungsschicht Verbindungs- und/oder Funktions- und/oder Verstärkungselemente aus dem gleichen Material wie das Verstärkungsmaterial oder einem damit verträglichen Material einstückig mit der Verstärkungsschicht angebracht bzw. ausgebildet sind.

2. Verfahren zum Herstellen eines mehrlagigen Verbundkörpers nach Anspruch 1, dadurch gekennzeichnet, daß auf eine Außenseite einer mit thermoplastischem Kunststoff gebundenen Naturfaserschicht ein mit dem thermoplastischen Material verträgliches Verstärkungsmaterial in flüssiger, pastöser, Pulver- oder Granulatform als dünne Schicht aufgetragen und durch Energiezufuhr mit der Naturfaserschicht innig verbunden wird, wobei Verbindungs- und/oder Funktions- und/oder Verstärkungselemente aus dem gleichen Material wie das Verstärkungsmaterial oder einem damit verträglichen Material einstückig mit der Verstärkungsschicht ausgebildet werden.
